# EUROPEAN PATENT APPLICATION

(11) **EP 4 464 663 A1**
(43) Date of publication of application: **20.11.2024**
(21) Application number: 23752821.1
(22) Date of filing: 06.02.2023
(51) Int. Cl.: C01B 33/18, C08L 101/00, C08K 3/36

(54) **SPHERICAL SILICA POWDER**

(30) Priority: 09.02.2022 JP 2022018509
(71) Applicant: Denka Company Limited, Tokyo 103-8338 (JP)
(72) Inventor: MINAMIKAWA, Takaaki, Tokyo 103-8338 (JP); SHIOTSUKI, Hiroyuki, Tokyo 103-8338 (JP); KARINO, Genta, Tokyo 103-8338 (JP)
(74) Representative: Gulde & Partner
(86) International application number: PCT/JP2023/003768
(87) International publication number: WO 2023/153357

(57) **Abstract**

This spherical silica powder according to the present invention is configured such that when the spherical silica powder is measured using a wet flow type image analyzer, a sphericity of a particle size of more than or equal to 5 um and less than 10 um is represented by S₁, a sphericity of a particle size of more than or equal to 10 um and less than 20 um is represented by S₂, a sphericity of a particle size of more than or equal to 20 um and less than 30 um is represented by S₃, a sphericity of a particle size of more than or equal to 30 um and less than 45 um is represented by S₄, and a sphericity of a particle size of more than or equal to 45 um is represented by S₅, at least two of S₁, S₂, S₃, S₄, and S₅ are more than or equal to 0.74.

## Description

### TECHNICAL FIELD

The present invention relates to spherical silica powder.

### BACKGROUND ART

So far, various developments have been made in a spherical shape. As this kind of technique, for example, a technique described in Patent Document 1 is known. Patent Document 1 describes a method of injecting and melting silica raw material powder into a flame to obtain molten spherical silica.

### RELATED DOCUMENT

### PATENT DOCUMENT

[Patent Document 1] Japanese Unexamined Patent Publication No. 2001-261328

### SUMMARY OF THE INVENTION

### TECHNICAL PROBLEM

However, as a result of investigation by the present inventors, it was found that the molten spherical silica described in Patent Document 1 has room for improvement in terms of fluidity.

### SOLUTION TO PROBLEM

As a result of further investigation by the present inventors, fluidity can be improved by appropriately controlling a sphericity of spherical silica powder in each of particle size classes, there by completing the present invention.

According to one aspect of the present invention, the following spherical silica powder is provided.
1. Spherical silica powder
   in which when the spherical silica powder is measured using a wet flow type image analyzer, a sphericity of a particle size of more than or equal to 5 um and less than 10 um is represented by S₁, a sphericity of a particle size of more than or equal to 10 um and less than 20 um is represented by S₂, a sphericity of a particle size of more than or equal to 20 um and less than 30 um is represented by S₃, a sphericity of a particle size of more than or equal to 30 um and less than 45 um is represented by S₄, and a sphericity of a particle size of more than or equal to 45 um is represented by S₅,
   at least two of S₁, S₂, S₃, S₄, and S₅ are more than or equal to 0.74.
2. The spherical silica powder according to 1.,
   in which when an average sphericity obtained from an average value of five values of S₁, S₂, S₃, S₄, and S₅ (where a value of 0 is excluded) is represented by S_{AVE}, S_{AVE} is more than or equal to 0.77.
3. The spherical silica powder according to 2.,
   in which in a volume frequency particle size distribution of the spherical silica powder measured using a wet laser diffraction scattering method, when a particle size corresponding to a cumulative value of 50% is represented by D₅₀,
   S_{AVE} and D₅₀ are configured to satisfy 0.01 ≤ S_{AVE}/D₅₀ ≤ 0.1.
4. The spherical silica powder according to any one of 1. to 3.,
   in which a tight bulk density measured in the following procedure B is more than or equal to 1.2 g/cm³ and less than or equal to 1.6 g/cm3,
   (Procedure B)
   the spherical silica powder is allowed to free-fall from a height of 25 cm to be injected into a 100 cm³ cup for measurement in an injection amount of 5 to 10 g for 1 minute, and the injection is continued until the spherical silica powder overflows from the cup to prepare a heaped cup;
   next, after rubbing off the powder overflowing from an upper surface of the heaped cup without tapping the heaped cup, a mass (g) of the spherical silica powder filled in the cup is measured to calculate a loose bulk density (g/cm³); and
   on the other hand, after tapping the heaped cup under a condition of 180 times (stroke length: 2 cm, 1 sec/time) in a vertical direction and rubbing off the powder overflowing from the upper surface of the heaped cup, a mass (g) of the spherical silica powder filled in the cup is measured to calculate the tight bulk density (g/cm³).
5. The spherical silica powder according to any one of 1. to 4.,
   in which when the loose bulk density and the tight bulk density measured in the following procedure B are represented by A and P, respectively,
   a compression degree obtained based on ((P - A) /P) × 100 is more than or equal to 15% and less than or equal to 50%.
6. The spherical silica powder according to any one of 1. to 5.,
   in which in a volume frequency particle size distribution measured using a wet laser diffraction scattering method, when a particle size corresponding to a cumulative value of 10% is represented by D₁₀, a particle size corresponding to a cumulative value of 50% is represented by D₅₀, and a particle size corresponding to a cumulative value of 97% is represented by D₉₇,
   (D₉₇ - D₁₀) /D₅₀ is more than or equal to 1.0 and less than or equal to 10.0.
7. The spherical silica powder according to any one of 1. to 6.,
   in which in a volume frequency particle size distribution measured using a wet laser diffraction scattering method, when a particle size corresponding to a cumulative value of 50% is represented by D₅₀ and a particle size corresponding to a cumulative value of 97% is represented by D₉₇,
   D₉₇/D₅₀ is more than or equal to 2.0 and less than or equal to 30.0.

### ADVANTAGEOUS EFFECTS OF INVENTION

According to the present invention, spherical silica powder having excellent fluidity is provided.

### BRIEF DESCRIPTION OF THE DRAWINGS

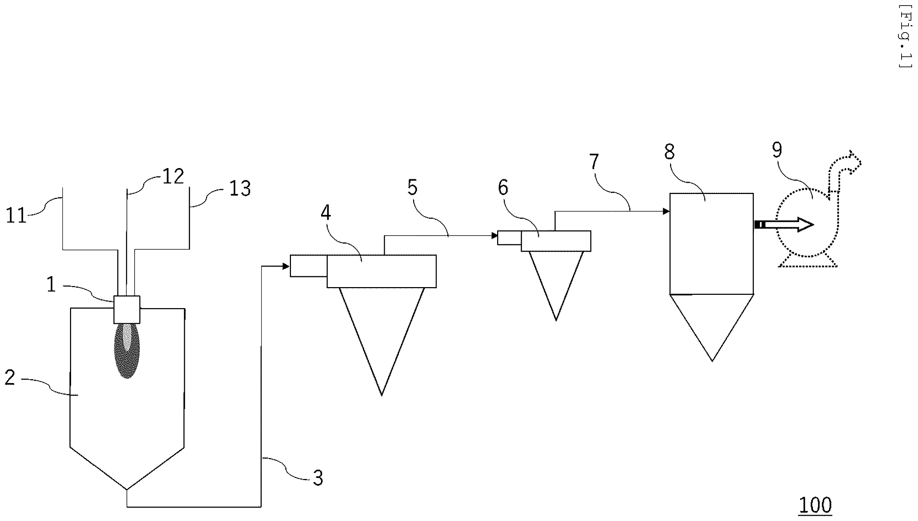

Fig. 1 is a schematic cross-sectional view showing a configuration of a thermal spraying device used for manufacturing spherical silica powder.

### DESCRIPTION OF EMBODIMENTS

The summary of spherical silica powder according to an embodiment of the present invention will be described.

The spherical silica powder according to the present embodiment is configured such that when the spherical silica powder is measured using a wet flow type image analyzer, a sphericity of a particle size of more than or equal to 5 um and less than 10 um is represented by S₁, a sphericity of a particle size of more than or equal to 10 um and less than 20 um is represented by S₂, a sphericity of a particle size of more than or equal to 20 um and less than 30 um is represented by S₃, a sphericity of a particle size of more than or equal to 30 um and less than 45 um is represented by S₄, and a sphericity of a particle size of more than or equal to 45 um is represented by S₅, at least two of S₁, S₂, S₃, S₄, and S₅ are more than or equal to 0.74.

At least two of S₁, S₂, S₃, S₄, and S₅ are more than or equal to 0.74, preferably more than or equal to 0.80, and more preferably more than or equal to 0.84. As a result, fluidity can be improved.

In addition, at least two, preferably three or more, and more preferably four or more of S₁, S₂, S₃, S₄, and S₅ are configured to satisfy more than or equal to 0.74. As a result, fluidity can be improved.

An average sphericity obtained from an average value of five values of S₁, S₂, S₃, S₄, and S₅ (where a value of 0 is excluded) is represented by S_{AVE}, and a median size of the spherical silica powder measured using a wet flow type image analyzer is represented by S₅₀ (µm).

The lower limit of S_{AVE} is, for example, more than or equal to 0.77, preferably more than or equal to 0.82, and more preferably more than or equal to 0.87. As a result, fluidity can be improved. The upper limit of S_{AVE} may be, for example, less than or equal to 0.99.

The sphericity of the spherical silica powder can be measured in the following procedure A under conditions of a room temperature of 25°C and a humidity of 60%.

In the obtained spherical silica powder, using a wet flow type image analyzer (manufactured by Sysmex Corporation, FPIA-3000), a sphericity (S₁) of a particle size of more than or equal to 5 µm and less than 10 µm, a sphericity (S₂) of a particle size of more than or equal to 10 um and less than 20 µm, a sphericity (S₃) of a particle size of more than or equal to 20 um and less than 30 µm, a sphericity (S₄) of a particle size of more than or equal to 30 um and less than 45 um, and a sphericity (S₅) of a particle size of more than or equal to 45 µm are measured.

The sphericity of each of the particle size classes is a value obtained by squaring a circularity of each of the particle size classes.

In the present embodiment, for example, by appropriately selecting raw material components of the spherical silica powder, a method of manufacturing the spherical silica powder, or the like, the sphericity of each of the particle size classes of S₁, S₂, S₃, S₄, and S₅, S_{AVE}, and S₅₀ can be controlled. Among these, for example, appropriate control of a raw material supply amount, a raw material particle size, a flame temperature, and melting flame conditions of combustible gas, supporting gas, dispersing gas, or the like is an element for adjusting the sphericity of each of the particle size classes of S₁, S₂, S₃, S₄, and S₅, S_{AVE}, and S₅₀ to be in the desired numerical ranges. For example, (i) when the raw material supply amount is reduced, the sphericity increases, and when the raw material supply amount is increased, the sphericity decreases. (ii) When a particle size of a plurality of raw materials approaches the average particle size, the sphericity increases, and when the particle size deviates from the average particle size, the sphericity decreases. (iii) When the flame temperature is high, the sphericity increases, and when the flame temperature is low, the sphericity decreases . (iv) When the temperature of the combustible gas is high, the sphericity increases, and when the temperature of the combustible gas is low, the sphericity decreases. (v) When the supporting gas approaches a theoretical ratio, the sphericity increases, and when the supporting gas deviates from the theoretical ratio, the sphericity decreases. (vi) By appropriately introducing the dispersing gas, coalescence is reduced, and the sphericity increases.

In the spherical silica powder according to the present embodiment, when a loose bulk density and a tight bulk density measured in the following procedure B are represented by A and P, respectively, a compression degree obtained based on ((P - A)/P) × 100 may be configured to be, for example, more than or equal to 15% and less than or equal to 50%.

The upper limit of the compression degree is, for example, less than or equal to 50%, preferably less than or equal to 40%, and more preferably less than or equal to 30%. As a result, fluidity can be improved.

The lower limit of the tight bulk density (P) is, for example, more than or equal to 1.2 g/cm³, preferably more than or equal to 1.25 g/cm³, and more preferably more than or equal to 1.3 g/cm³. As a result, handleability can be improved.

The upper limit of the tight bulk density (P) is, for example, less than or equal to 1.6 g/cm³, preferably less than or equal to 1.5 g/cm³, and more preferably less than or equal to 1.4 g/cm³. As a result, compatibility with a resin can be improved.

The loose bulk density, the tight bulk density, and the compression degree of the spherical silica powder can be measured in the following procedure B under conditions of a room temperature of 25°C and a humidity of 55%.

First, the spherical silica powder is allowed to free-fall from a height of 25 cm to be injected into a 100 cm³ cup for measurement in an injection amount of 5 to 10 g for 1 minute, and the injection is continued until the spherical silica powder overflows from the cup to prepare a heaped cup.

Next, after rubbing off the powder overflowing from an upper surface of the heaped cup without tapping the heaped cup, a mass (g) of the spherical silica powder filled in the cup is measured to calculate a loose bulk density (g/cm³).

On the other hand, after tapping the heaped cup under a condition of 180 times (stroke length: 2 cm, 1 sec/time) in a vertical direction and rubbing off the powder overflowing from the upper surface of the heaped cup, a mass (g) of the spherical silica powder filled in the cup is measured to calculate the tight bulk density (g/cm³).

A volume frequency particle size distribution of the spherical silica powder is measured using a wet laser diffraction scattering method, and in the volume frequency particle size distribution, a particle size corresponding to a cumulative value of 10% is represented by D₁₀, a particle size corresponding to a cumulative value of 50% is represented by D₅₀, and a particle size corresponding to a cumulative value of 97% is represented by D₉₇.

S_{AVE} and S₅₀ may be configured to satisfy 0.01 ≤ S_{AVE}/D₅₀ ≤ 0.1.

The lower limit of S_{AVE}/D₅₀ is, for example, more than or equal to 0.01, preferably more than or equal to 0.015, and more preferably more than or equal to 0.023. As a result, fluidity can be improved.

The upper limit of the S_{AVE}/D₅₀ is, for example, less than or equal to 0.1, preferably less than or equal to 0.75, and more preferably less than or equal to 0.5. As a result, fluidity can be improved.

The upper limit of (D₉₇ - D₁₀) /D₅₀ is, for example, less than or equal to 10.0, preferably less than or equal to 7.0, and more preferably less than or equal to 5.0. As a result, the width of the particle size distribution is sharp, and fluidity can be improved.

On the other hand, the lower limit of (D₉₇ - D₁₀) /D₅₀ is, for example, more than or equal to 1.0, preferably more than or equal to 1.1, and more preferably more than or equal to 2.0. As a result, the particle size distribution has a constant width, and moldability can be improved.

The upper limit of D₉₇/D₅₀ is, for example, less than or equal to 30.0, preferably less than or equal to 20.0, and more preferably less than or equal to 15.0. As a result, the particle size of coarse particles is sharp, and molding failure of a resin molded product caused by the coarse particles can be suppressed.

On the other hand, the lower limit of D₉₇/D₅₀ is, for example, more than or equal to 2.0, preferably more than or equal to 3.0, and more preferably more than or equal to 5.0. As a result, the particle size distribution has a constant width, and fluidity and moldability can be improved.

The particle size distribution of the spherical silica powder is a value based on particle size measurement using a laser diffraction scattering method, and can be measured using a particle size distribution analyzer, for example, "MODEL LS-13-230" (manufactured by Beckman Coulter, Inc.). During the measurement, water is used as a solvent, and as a pre-treatment, a dispersion treatment can be performed by applying an output of 200 W for 1 minute using a homogenizer. In addition, a polarization intensity differential scattering (PIDS) concentration is adjusted to be 45 to 55%. 1.33 is used as a refractive index of water, and a refractive index of a material of the powder is considered as a refractive index of the powder. For example, amorphous silica is measured assuming that the refractive index is 1.50.

A method of manufacturing the spherical silica powder according to the present embodiment will be described.

The spherical silica powder will also be referred to as molten spherical particles, and silica raw material powder is supplied into a high-temperature flame formed by a combustion reaction of combustible gas and supporting gas, and is melted and spheroidized at higher than or equal to a melting point thereof to manufacture the spherical silica powder. As necessary, the molten spherical particle obtained as described above may be classified and screened.

Fig. 1 shows an example of a schematic diagram of a thermal spraying device used for manufacturing the spherical silica powder.

A thermal spraying device 100 of Fig. 1 is composed of: a melting furnace 2 where a burner 1 is provided in; cyclones 4 and 6 for classifying molten spherical particles produced from high-temperature exhaust gas of the flame by suction of a blower 9; and a bag filter 8 for recovering fine powder that cannot be collected by the cyclones 4 and 6.

The melting furnace 2 is composed of a vertical furnace body but is not limited thereto. The melting furnace 2 may be a so-called horizontal furnace or an inclined furnace that is a horizontal type and blasts a flame in a horizontal direction.

The high-temperature exhaust gas is cooled by pipes 3, 5, and 7 including a water-cooling jacket.

A suction gas amount control valve and a gas exhaust port (not shown) may be connected to the blower 9.

A collected powder extraction device (not shown) may be connected to lower portions of the melting furnace 2, the cyclones 4 and 6, and the bag filter 8.

The classification can be performed using a well-known device such as a gravity-settling chamber, a cyclone, or a classifier having a rotary blade. This classification operation may be incorporated into a transport step of a melted and spheroidized product, or may be performed in another line after collecting the powder in a batchwise manner.

As the combustible gas, for example, one kind or two or more kinds such as acetylene, propane, or butane is used. Propane, butane, or a mixed gas thereof having a relatively small amount of heat generation is preferable.

As the supporting gas, for example, gas including oxygen is used. In general, the use of pure oxygen having a concentration of more than or equal to 99 wt% is inexpensive and most preferable. In order to reduce the amount of heat generation from the gas, inert gas such as air or argon can also be mixed with the supporting gas.

The spherical silica powder may be amorphous and/or crystalline.

In the spherical silica powder, for example, a ratio of amorphousness measured using the following method is preferably more than or equal to 95% and more preferably more than or equal to 97%. The ratio of amorphousness is measured from an intensity ratio of specific diffraction peaks obtained by performing X-ray diffraction analysis in a 2θ range of 26° to 27.5° of a CuKα ray using a powder X-ray diffractometer (for example, trade name "MODEL MiniFlex", manufactured by RIGAKU Corporation). In the silica powder, crystalline silica has a main peak at 26.7°, and amorphous silica has no peak. When amorphous silica and crystalline silica are mixed, a peak height of 26.7° corresponding to the proportion of the crystalline silica is obtained. Therefore, a crystalline silica mixing ratio (X-ray diffraction intensity of sample/X-ray diffraction intensity of crystalline silica) is calculated from a ratio of an X-ray intensity of the sample to an X-ray intensity of a crystalline silica standard sample, and the ratio of amorphousness is obtained from the expression "Ratio of Amorphousness (%) = (1 - Crystalline Silica Mixing Ratio) × 100".

In the spherical silica powder, it is preferable that a ratio (S_{B}/S_{C}) of a specific surface area S_{B} measured using a BET method to a theoretical specific surface area Sc calculated from the particle size distribution is, for example, less than or equal to 2.5. This ratio being high represents that the content of ultrafine particles that cannot be detected by a particle size distribution analyzer of a laser diffraction method or the like is high. From the viewpoint of suppressing an increase in viscosity when the spherical silica particles are mixed in a resin composition, the value of S_{B}/S_{C} described below is less than or equal to 2.5 and more preferably less than or equal to 2.0.

The specific surface area S_{B} is a value based on a BET method, and can be measured using a specific surface area measuring instrument, for example, "MODEL 4-SORBU2" (manufactured by Yuasa Ionics Ltd.) .

The theoretical specific surface area Sc can be automatically calculated by the above-described particle size distribution analyzer. The principle of the measuring instrument is based on the expression "Sc = 6/(ρ·D)". In the expression, D represents an area average particle size (µm), and ρ represents a density (g/cm³) of the spherical silica powder. For example, when the powder is amorphous silica, the theoretical specific surface area Sc is 2.21.

D is obtained from the expression "D = Σ(ni·ai·di)/Σ(ni·ai)". Here, in one population of particles of the powder, when the number of particles having particle sizes d1, d2, ..., di, ..., and dk in order from the smallest particle size are represented by n1, n2, ..., ni, ..., and nk, respectively, and surfaces areas per particle are represented by a1, a2, ..., ai, ..., and ak, respectively, D is obtained from "D = (n1·a1·d1 + n2·a2·d2 + ... + ni·ai·di + ... + nk·ak·dk)/(n1·a1 + n2·a2 + ... + ni·ai + nk·ak)".

It is preferable that the spherical silica powder does not substantially include particles having a particle size of less than 50 nm. As a result, an increase in viscosity when the spherical silica particles are mixed in a resin composition can be suppressed.

Not substantially including the particles having a particle size of less than 50 nm represents that, when the number of particles having a particle size of less than 50 nm in any 100 photographs obtained at a magnification of 50, 000-fold by an electron microscope is counted and is converted into an average value per photograph, the value is less than 50. It is preferable that the content of the particles having a particle size of less than 50 nm is small.

The electron microscope photographs can be obtained using a field emission scanning electron microscope (MODEL "FE-SEM, JSM-6301F", manufactured by JEOL Ltd.) under conditions of an accelerated voltage of 15 kV and an irradiation current of 3 × 10 - 11 A. As a pre-treatment of the imaging, using a vacuum deposition device (MODEL "JEE-4X", manufactured by JEOL Ltd.), carbon is deposited on the spherical silica powder for 2 seconds, and gold-palladium is further deposited for 60 seconds.

A material where the spherical silica powder according to the present invention is mixed in a resin composition can be suitably used for a resin molding material.

Next, the resin composition according to the present embodiment will be described.

The resin composition includes a resin or a well-known resin additive in addition to the spherical silica powder according to the present invention.

The spherical silica powder in the resin composition may be used alone or may be mixed with another filler for use. The resin composition may include 10 to 99 mass% of the spherical silica powder, or may include 10 to 99 mass% of mixed inorganic powder including the spherical silica powder and the other filler. In addition, the content of the other filler in the mixed inorganic powder may be, for example, 1 to 20 mass% or 3 to 15 mass% with respect to 100 mass% of the spherical silica powder.

In the present specification, "to" represents that an upper limit value and a lower limit value are included unless specified otherwise.

Examples of the other filler include alumina, titania, silicon nitride, aluminum nitride, silicon carbide, talc, and calcium carbonate. As the other filler, a filler having an average particle size of about 5 to 100 um is used, and a particle size configuration and a shape thereof are not particularly limited.

Examples of the above-described resin include an epoxy resin, a silicone resin, a phenol resin, a melamine resin, a urea resin, an unsaturated polyester, a fluororesin, a polyamide such as polyimide, polyamideimide, or polyetherimide, a polyester such as polybutylene terephthalate or polyethylene terephthalate, polyphenylene sulfide, wholly aromatic polyester, polysulfone, a liquid crystal polymer, polyethersulfone, polycarbonate, a maleimide-modified resin, an ABS resin, an acrylonitrile-acrylic rubber-styrene (AAS) resin, and an acrylonitrile-ethylene-propylene-diene rubber-styrene (AES) resin. These resins may be used alone or may be used in combination of two or more kinds.

The resin composition can be manufactured, for example, by blending raw material components at a predetermined amount ratio using a blender, a Henschel mixer, or the like, kneading the blended product using a heating roll, a kneader, a single-screw or twin-screw kneader, or the like, and cooling and crushing the kneaded product.

Hereinabove, the embodiment of the present invention has been described. However, the embodiment is merely an example of the present invention, and various configurations other than the above-described configurations can be adopted. In addition, the present invention is not limited to the above-described embodiment, and modifications, improvements, and the like within a range where the object of the present invention can be achieved are included in the present invention.

### Examples

Hereinafter, the present invention will be described in detail with reference to Examples. However, the present invention is not limited to the description of these Examples.

### <Manufacturing of Spherical Silica Powder>

Spherical silica powder was manufactured using the thermal spraying device 100 shown in Fig. 1 where the burner 1 was provided in the upper portion of the melting furnace 2 and a collection line consisting of the cyclones 4 and 6 and the bag filter 8 was directly connected to the lower portion of the melting furnace 2.

The burner 1 had a double pipe structure capable of forming an inner flame and an outer flame, was provided on the top portion of the melting furnace 2, and was connected to each of a combustible gas pipe 11, a supporting gas supply pipe 12, and a raw material supply pipe 13.

In the melting furnace 2, the silica raw material powder was supplied into a high-temperature flame by the raw material supply pipe 13 and was melted such that spheroidized molten spherical particles were able to be formed. The molten spherical particles having passed through the melting furnace 2 were sucked by the blower 9 together with combustion exhaust gas, were moved into the pipes 3, 5, and 7 by the air, and were classified and collected by the cyclones 4, 6 or the bag filter 8.

### (Examples 1 to 12 and Comparative Examples 1 and 2)

Using the above-described thermal spraying device 100, LPG as the combustible gas was supplied from the combustible gas pipe 11, oxygen as the supporting gas was supplied from the supporting gas supply pipe 12, and a high-temperature flame was formed by combustion of LPG and oxygen in the burner 1. The supply amount of carrier gas of the raw materials was 20 Nm³/hr, the supply amount of the combustible gas of the burner was 8 Nm³/hr, and the supply amount of the supporting gas was 20 Nm³/hr. Natural silica powder (average particle size: 5 um to 50 µm) was supplied into the flame formed as described above to obtain spherical amorphous silica powder. The obtained powder was classified and mixed. As a result, powders according to Examples 1 to 12 were obtained.

### (Comparative Examples 1 and 2)

Spherical silica powders were obtained using the same method as that of Examples described above, except for the powder supply amount and the flame forming conditions.

The powder supply amount of Comparative Example 1 was 2.0 times that of Example 1, the supply amount of carrier gas of the raw materials was 20 Nm³/hr, the supply amount of the combustible gas of the burner was 5 Nm³/hr, and the supply amount of the supporting gas was 15 Nm³/hr.

The powder supply amount of Comparative Example 2 was 3.3 times that of Example 1, the supply amount of carrier gas of the raw materials was 15 Nm³/hr, the supply amount of the combustible gas of the burner was 4 Nm³/hr, and the supply amount of the supporting gas was 15 Nm³/hr.

**[Table 1]**

| Silica Powder | | Unit | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 |
|---|---|---|---|---|---|---|---|---|---|---|---|---|---|---|---|---|
| Sphericity | 5 to 10 µm S₁ | | 0.85 | 0.87 | 0.86 | 0.89 | 0.82 | 0.87 | 0.87 | 0.93 | 0.93 | 0.93 | 0.94 | 0.92 | 0.69 | 0.50 |
| | 10 to 20 µm S₂ | | 0.70 | 0.77 | 0.73 | 0.80 | 0.68 | 0.72 | 0.74 | 0.81 | 0.83 | 0.87 | 0.85 | 0.80 | 0.57 | 0.39 |
| | 20 to 30 µm S₃ | | 0.74 | 0.82 | 0.73 | 0.86 | 0.88 | 0.90 | 0.88 | 0.85 | 0.56 | 0.79 | 0 | 0.94 | 0.47 | 0.46 |
| | 30 to 45 µm S₄ | | 0 | 0.77 | 0.76 | 0.97 | 0.84 | 0.94 | 0.59 | 0.86 | 0.74 | 0.83 | 0.96 | 0.96 | 0.76 | 0.58 |
| | ≥ 45 µm S₅ | | 0.81 | 0.91 | 0.81 | 0.94 | 0.91 | 0.86 | 0.82 | 0.81 | 0.84 | 0.72 | 0.90 | 0.85 | 0.62 | 0.42 |
| S_{AVE} | | | 0.78 | 0.83 | 0.78 | 0.89 | 0.83 | 0.86 | 0.78 | 0.85 | 0.78 | 0.83 | 0.91 | 0.90 | 0.62 | 0.47 |
| S_{AVE}/D₅₀ | | µm | 0.038 | 0.050 | 0.028 | 0.022 | 0.027 | 0.040 | 0.024 | 0.035 | 0.026 | 0.048 | 0.029 | 0.033 | 0.015 | 0.022 |
| Loose Bulk Density | | g/cm³ | 0.69 | 0.79 | 0.67 | 1.09 | 0.95 | 0.84 | 0.95 | 0.87 | 0.90 | 0.74 | 0.94 | 0.81 | 0.62 | 0.72 |
| Tight Bulk Density | | g/cm³ | 1.21 | 1.34 | 1.29 | 1.30 | 1.49 | 1.38 | 1.55 | 1.38 | 1.40 | 1.34 | 1.49 | 1.23 | 1.2 | 1.26 |
| Compression Degree | | % | 43 | 41 | 48 | 16 | 36 | 39 | 39 | 37 | 36 | 45 | 37 | 34 | 48 | 43 |
| Particle Size Distribution | D₁₀ | µm | 2.3 | 2.3 | 2.3 | 3.4 | 2.7 | 2.3 | 3.1 | 2.5 | 2.2 | 1.9 | 2.4 | 2.3 | 3.5 | 2.8 |
| | D₅₀ | | 20.4 | 16.5 | 27.6 | 40.2 | 31.1 | 21.5 | 33.0 | 24.3 | 30.4 | 17.1 | 31.5 | 27.2 | 41.1 | 21.0 |
| | D₉₇ | | 102.7 | 107.0 | 95.1 | 110.8 | 108.8 | 101.1 | 108.6 | 103.1 | 105.6 | 76.9 | 81.9 | 82.1 | 128.3 | 76.3 |
| | D₉₇/D₅₀ | | 5.0 | 6.5 | 3.4 | 2.8 | 3.5 | 4.7 | 3.3 | 4.2 | 3.5 | 4.5 | 2.6 | 3.0 | 3.1 | 3.6 |
| | (D₉₇-D₁₀) /D₅₀ | | 4.9 | 6.3 | 3.4 | 2.7 | 3.4 | 4.6 | 3.2 | 4.1 | 3.4 | 4.4 | 2.5 | 2.9 | 3.0 | 3.5 |
| Fluidity | | | Good | Good | Good | Good | Good | Good | Good | Good | Good | Good | Good | Good | Bad | Bad |
| Moldability | | | Good | Good | Good | Good | Good | Good | Good | Good | Good | Good | Good | Good | Bad | Bad |

### <Sphericity>

Under conditions of a room temperature of 25°C and a humidity of 60%, a sphericity of the spherical silica powder was obtained as follows.

In the obtained spherical silica powder, using a wet flow type image analyzer (manufactured by Sysmex Corporation, FPIA-3000), a sphericity (S₁) of a particle size of more than or equal to 5 µm and less than 10 µm, a sphericity (S₂) of a particle size of more than or equal to 10 um and less than 20 µm, a sphericity (S₃) of a particle size of more than or equal to 20 um and less than 30 µm, a sphericity (S₄) of a particle size of more than or equal to 30 um and less than 45 µm, and a sphericity (S₅) of a particle size of more than or equal to 45 um were measured.

### [Measurement Procedure]

A measurement sample used in the wet flow type image analyzer was prepared as follows.

0.05 g of a sample of the spherical silica powder was weighed in a 20 ml glass beaker container, 10 ml of a propylene glycol 25 mass% aqueous solution was added thereto, and the solution was dispersed by an ultrasonic disperser (ASU-10M, manufactured by AS ONE Corporation) for 3 minutes. The total amount of the solution was put into FPIA-3000 and was measured in an LPF mode/quantitative count system (total number of counts: 100, number of repetitions of measurement: 1).

Using the above-described wet flow type image analyzer, a perimeter of one particle projection image and a perimeter of a circle corresponding to the area of the particle projection image were analyzed, and a circularity was obtained from the following expression. Circularity = (Perimeter of Particle Projection Image)/(Perimeter of Circle Corresponding to Area of Particle Projection Image)

The sphericity and the circularity are average values of the particles in the range of each of the particle size classes.

The sphericity is a value obtained by squaring the circularity of each of the particle size classes.

In addition, an average sphericity (S_{AVE}) was calculated from an average value of four values of S₁, S₃, S₄, and S₅ (where a value of 0 is excluded).

### <Loose Bulk Density, Tight Bulk Density, and Compression Degree>

Under conditions of a room temperature of 25°C and a humidity of 60%, a loose bulk density, a tight bulk density, and a compression degree of the spherical silica powder were obtained.

The obtained spherical silica powder was allowed to free-fall from a height of 25 cm to be injected into a 100 cm³ cup for measurement in an injection amount of 5 to 10 g for 1 minute, and the injection was continued until the spherical silica powder overflew from the cup to prepare a heaped cup.

Next, after rubbing off the powder overflowing from an upper surface of the heaped cup without tapping the heaped cup, a mass (g) of the spherical silica powder filled in the cup was measured to calculate a loose bulk density (g/cm³).

On the other hand, after tapping the heaped cup under a condition of 180 times (stroke length: 2 cm, 1 sec/time) in a vertical direction and rubbing off the powder overflowing from the upper surface of the heaped cup, a mass (g) of the spherical silica powder filled in the cup was measured to calculate the tight bulk density (g/cm³).

When the loose bulk density and the tight bulk density obtained in the above-described procedure were represented by A and P, respectively, the compression degree (%) was obtained based on the expression: "((P - A)/P) × 100".

### <Particle Size Distribution>

Regarding the obtained spherical silica powder, a volume frequency particle size distribution was obtained with a wet laser diffraction scattering method using a particle size distribution analyzer (LS-13-230, manufactured by Beckman Coulter, Inc.). Water was used as a solvent, and as a pre-treatment, a dispersion treatment was performed for the measurement by applying an output of 200 W for 1 minute using a homogenizer. In addition, a polarization intensity differential scattering (PIDS) concentration was adjusted to be 45 to 55% for the measurement.

Based on the obtained volume frequency particle size distribution, a particle size D_{X} corresponding to a cumulative value of X% was calculated.

### <Fluidity of Resin Composition>

90 parts by mass of the obtained silica powder, 5.5 parts by mass of a biphenyl type epoxy resin (YX-4000HK, manufactured by Japan Epoxy Resin Corporation), 4. 8 parts by mass of a phenol resin (a phenol aralkyl resin, MEHC-7800S, manufactured by Meiwa Plastic industries, Ltd.), 0.15 parts by mass of triphenylphosphine (TPP, manufactured by Hokko Chemical Industry Co., Ltd.), and 0.35 parts by mass of N-phenyl-3- aminopropyltrimethoxysilane (KBM-573, manufactured by Shin-Etsu Chemical Co., Ltd.) were mixed with each other using a Henschel mixer ("FM-20C/I", manufactured by Nippon Coke & Engineering. Co., Ltd.) under conditions of an ordinary temperature and a rotating speed of 2000 rpm, and the obtained mixture was heated and kneaded using an intermeshing co-rotating twin screw extruder (screw diameter D = 25 mm, L/D = 10.2, paddle rotating speed: 50 to 120 rpm, discharge amount: 3.0 kg/Hr, kneaded product temperature: 98 to 100°C) to obtain a resin composition.

The obtained resin composition was used and was measured using a spiral flow mold according to EMMI-1-66 (Epoxy Molding Material Institute; Society of Plastic Industry). A mold temperature was 175°C, a molding pressure was 7.4 MPa, and a pressure holding time was 90 seconds.

A spiral flow of more than or equal to 120 cm was evaluated as Good, and a spiral flow of less than 120 cm was evaluated as Bad.

### <Moldability of Resin Composition>

Using the resin composition obtained in the evaluation of <Fluidity of Resin Composition> above, a 48-pin TSOP where simulated elements were sealed was prepared by a transfer molding machine with a mold having a resin thickness of 70 um above and below the chip, and whether or not an external failure such as insufficient filling was inspected by visual inspection. A case where the external failure was not present was evaluated as Good, and a case where the external failure was present was evaluated as Bad.

A mold temperature was 175°C, a molding pressure was 7.4 MPa, and a pressure holding time was 120 seconds. After the molding, after-curing was performed at 155°C for 6 hours.

In the results of the spherical silica powders according to Examples 1 to 12, fluidity was able to be improved as compared to Comparative Example 1, and moldability was able to be improved as compared to Comparative Example 2.

The present application claims priority based on Japanese Patent Application No. 2022-018509 filed on February 9, 2022, the entire content of which is incorporated herein by reference.

### REFERENCE SIGNS LIST

- 1: Burner
- 2: Melting furnace
- 3: Pipe
- 4: Cyclone
- 5: Pipe
- 6: Cyclone
- 7: Pipe
- 8: Bag filter
- 9: Blower
- 11: Combustible gas pipe
- 12: Supporting gas supply pipe
- 13: Raw material supply pipe
- 100: Thermal spraying device

## Claims

1. Spherical silica powder
wherein when the spherical silica powder is measured using a wet flow type image analyzer, a sphericity of a particle size of more than or equal to 5 um and less than 10 um is represented by S₁, a sphericity of a particle size of more than or equal to 10 um and less than 20 um is represented by S₂, a sphericity of a particle size of more than or equal to 20 um and less than 30 um is represented by S₃, a sphericity of a particle size of more than or equal to 30 um and less than 45 um is represented by S₄, and a sphericity of a particle size of more than or equal to 45 um is represented by S₅,
at least two of S₁, S₂, S₃, S₄, and S₅ are more than or equal to 0.74.

2. The spherical silica powder according to Claim 1,
wherein when an average sphericity obtained from an average value of five values of S₁, S₂, S₃, S₄, and S₅ (where a value of 0 is excluded) is represented by S_{AVE}, S_{AVE} is more than or equal to 0.77.

3. The spherical silica powder according to Claim 2,
wherein in a volume frequency particle size distribution of the spherical silica powder measured using a wet laser diffraction scattering method, when a particle size corresponding to a cumulative value of 50% is represented by D₅₀,
S_{AVE} and D₅₀ are configured to satisfy 0.01 ≤ S_{AVE}/D₅₀ ≤ 0.1.

4. The spherical silica powder according to any one of Claims 1 to 3,
wherein a tight bulk density measured in the following procedure B is more than or equal to 1.2 g/cm³ and less than or equal to 1.6 g/cm³,
(Procedure B)
the spherical silica powder is allowed to free-fall from a height of 25 cm to be injected into a 100 cm³ cup for measurement in an injection amount of 5 to 10 g for 1 minute, and the injection is continued until the spherical silica powder overflows from the cup to prepare a heaped cup;
next, after rubbing off the powder overflowing from an upper surface of the heaped cup without tapping the heaped cup, a mass (g) of the spherical silica powder filled in the cup is measured to calculate a loose bulk density (g/cm³); and
on the other hand, after tapping the heaped cup under a condition of 180 times (stroke length: 2 cm, 1 sec/time) in a vertical direction and rubbing off the powder overflowing from the upper surface of the heaped cup, a mass (g) of the spherical silica powder filled in the cup is measured to calculate the tight bulk density (g/cm³).

5. The spherical silica powder according to Claim 4,
wherein when the loose bulk density and the tight bulk density measured in the following procedure B are represented by A and P, respectively,
a compression degree obtained based on ((P - A) /P) × 100 is more than or equal to 15% and less than or equal to 50%.

6. The spherical silica powder according to any one of Claims 1 to 5,
wherein in a volume frequency particle size distribution measured using a wet laser diffraction scattering method, when a particle size corresponding to a cumulative value of 10% is represented by D₁₀, a particle size corresponding to a cumulative value of 50% is represented by D₅₀, and a particle size corresponding to a cumulative value of 97% is represented by D₉₇,
(D₉₇ - D₁₀) /D₅₀ is more than or equal to 1.0 and less than or equal to 10.0.

7. The spherical silica powder according to any one of Claims 1 to 6,
wherein in a volume frequency particle size distribution measured using a wet laser diffraction scattering method, when a particle size corresponding to a cumulative value of 50% is represented by D₅₀ and a particle size corresponding to a cumulative value of 97% is represented by D₉₇,
D₉₇/D₅₀ is more than or equal to 2.0 and less than or equal to 30.0.
